(19) Europäisches Patentamt
European Patent Office
Office européen des brevets

(11) **EP 3 211 746 A1**

(12) **EUROPÄISCHE PATENTANMELDUNG**

(43) Veröffentlichungstag:
**30.08.2017 Patentblatt 2017/35**

(51) Int Cl.:
***H02J 3/38*** (2006.01)

(21) Anmeldenummer: **17156082.4**

(22) Anmeldetag: **14.02.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **23.02.2016 DE 102016002076**

(71) Anmelder: **Senvion GmbH**
**22297 Hamburg (DE)**

(72) Erfinder: **Letas, Heinz-Hermann**
**24796 Bovenau (DE)**

(74) Vertreter: **Glawe, Delfs, Moll**
**Partnerschaft mbB**
**von Patent- und Rechtsanwälten**
**Postfach 13 03 91**
**20103 Hamburg (DE)**

(54) **EIGENBEDARFSREGELUNG EINER WINDENERGIEANLAGE**

(57) Die Erfindung betrifft eine Windenergieanlage umfassend ein Eigenbedarfsnetz (6), ein Stellelement (4) zum Ändern einer Spannung im Eigenbedarfsnetz (6) und eine Eigenbedarfsregelung (5) zur Regelung der Spannung U im Eigenbedarfsnetz (6), wobei erfindungsgemäß vorgesehen ist, dass die Eigenbedarfsregelung (5) zur Übermittlung eines Schaltsignals an das Stellelement (4) unter Berücksichtigung einer Frequenz f der Spannung U ausgebildet ist. Mit der Erfindung wird eine Überbelastung der Eigenbedarfskomponenten einer Windenergieanlage durch Frequenzabweichungen verringert oder vermieden.

**Fig. 1**

EP 3 211 746 A1

**Beschreibung**

Die Erfindung betrifft eine Windenergieanlage, die ein Eigenbedarfsnetz und eine Eigenbedarfsregelung zum Regeln der Spannung des Eigenbedarfsnetzes aufweist, sowie ein Verfahren zum Regeln der Spannung des Eigenbedarfsnetzes.

Zum Betrieb einer Windenergieanlage ist es erforderlich, dass die Komponenten der Windenergieanlage mit elektrischer Spannung versorgt werden. Dieser Eigenbedarf der elektrischen Spannung der Windenergieanlage wird direkt von der Netzspannung des Leistungskreises bereitgestellt. Das heißt, dass ein Teil der von der Windenergieanlage erzeugten elektrischen Energie zum Betrieb der Eigenbedarfskomponenten der Windenergieanlage genutzt wird.

Es ist bekannt, einen Transformator zum Einspeisen der elektrischen Leistung von dem Leistungskreis in ein Netz für Eigenbedarfskomponenten zu benutzen. Allerdings haben die Eigenbedarfskomponenten der Windenergieanlage geringere Spannungstoleranzen als die Komponenten, die die elektrische Energie in das Versorgungsnetz einspeisen. Daher müssen Spannungsschwankungen, die aus den großen Spannungstoleranzen in dem Leistungskreis resultieren, in dem Netz für die Eigenbedarfskomponenten eingeschränkt werden. Dazu ist eine Regelung des Eigenbedarfs vorgesehen, die ein Konstant-Halten der Spannung im Eigenbedarfsnetz im Rahmen der geringeren Spannungstoleranz der Eigenbedarfskomponenten bewirkt. Die Regelung erfolgt dabei mittels eines Stelltransformators. Problematisch ist allerdings, dass die Frequenztoleranzen einiger Eigenbedarfskomponenten der Windenergieanlage geringer sind als die Frequenztoleranz der Komponenten des Leistungskreises. Frequenzen können durch einen Stelltransformator nicht verändert werden. Durch hohe Frequenzabweichungen können bei den Eigenbedarfskomponenten Überbelastungen auftreten, die zu Verlusten in der elektrischen Leistung führen können.

Aufgabe der Erfindung ist die Schaffung einer Windenergieanlage, die mit wenig Aufwand besser vor Spannungs- und Frequenzabweichungen geschützt ist. Weiter umfasst die Aufgabe die Schaffung eines entsprechenden Verfahrens.

Die Aufgabe wird gelöst durch die Merkmale der unabhängigen Ansprüche. Vorteilhafte Weiterbildungen sind Gegenstand der abhängigen Ansprüche.

Bei einer Windenergieanlage umfassend ein Eigenbedarfsnetz, ein Stellelement zum Ändern der Spannung im Eigenbedarfsnetz und eine Eigenbedarfsregelung zur Regelung der Spannung U im Eigenbedarfsnetz, ist erfindungsgemäß vorgesehen, dass die Eigenbedarfsregelung zur Übermittlung eines Schaltsignals an das Stellelement unter Berücksichtigung einer Frequenz f der Spannung U ausgebildet ist.

Nachfolgend seien einige Begriffe näher erläutert:

Unter einem Eigenbedarfsnetz wird der Teil des internen Energieversorgungsnetzes einer Windenergieanlage verstanden, der die internen energieverbrauchenden Komponenten, wie z. B. Lüfter, Transformatoren, Motoren oder Regelungsvorrichtungen der Windenergieanlage mit dem Leistungskreis der Windenergieanlage verbindet.

Die Erfindung hat erkannt, dass mittels einer intelligenten Eigenbedarfsregelung, die nicht nur die Spannung sondern auch die Frequenz berücksichtigt, die Auswirkungen von Frequenzschwankungen auf das Eigenbedarfsnetz begrenzt werden können. In Transformatoren und Asynchronmaschinen bewirken Frequenzschwankungen Schwankungen der Magnetisierung des Eisenkerns. Tiefe Frequenzen bewirken wie hohe Spannungen eine Erhöhung der Magnetisierung und hohe Frequenzen bewirken wie niedrige Spannungen eine Verringerung der Magnetisierung. Wenn aufgrund von Spannungs- und Frequenzschwankungen eine hohe Magnetisierung in einem Eisenkern entsteht, wird der Eisenkern gesättigt, so dass eine große Erwärmung und dadurch hohe Eisenverluste auftreten, d.h. Verluste bei der Transformation der Spannung durch die Erwärmung des Eisenkerns. Bei einer verringerten Magnetisierung muss bei konstanter Leistung von Motoren ein erhöhter Laststrom eingespeist werden, um die verringerte Magnetisierung zu kompensieren. Dies erwärmt die elektrischen Leitungen und erhöht die Verluste in ihnen. Indem zum Regeln der Spannung ein Schaltsignal unter Berücksichtigung einer Frequenz f der Spannung U übermittelt wird, kann die Magnetisierung in den Eigenbedarfskomponenten begrenzt werden. Aufgrund dieser Berücksichtigung der Frequenz f bei der Spannungsregelung durch die Eigenbedarfsregelung werden Überbelastungen der Eigenbedarfskomponenten und die damit einhergehenden Verluste durch Schwankungen der Magnetisierung mit geringem Aufwand vermieden.

Es ist zweckmäßig, wenn die Eigenbedarfsregelung zur Ermittlung des Verhältnisses aus der Spannung U und der Frequenz f ausgebildet ist.

Vorteilhafterweise umfasst die Eigenbedarfsregelung ein mit dem Eigenbedarfsnetz verbundenes Spannungsmesselement zum Erfassen eines Spannungs-Ist-Werts.

Weiter ist die Eigenbedarfsregelung mit Vorteil zum Bilden mindestens eines Schwellwerts als Grenze eines Spannungsbereichs ausgebildet, wobei beim Bilden ein Kennfeld aus der Spannung U und einer Frequenz f der Spannung U berücksichtigt wird. Unter einem Kennfeld aus der Spannung U und einer Frequenz f der Spannung U wird ein Feld aus mehreren Kennlinien für unterschiedliche Regelungsszenarien verstanden. Die Kennlinien werden durch eine Reihe von Stützpunkten aus Quotienten der Spannung U und der Frequenz f gebildet. Die Quotienten aus der Spannung U und der Frequenz f bilden dabei Grenzwerte in Bezug auf die Nennfrequenz und Nennspannung ab, wobei die Grenzwerte im Betrieb nicht überschritten werden sollen. Das Kennfeld kann in einem Extremfall eine einzige konstante Kennlinie umfassen, d.h. es kann aus einem einzigen Wert für einen Quotienten aus der Spannung U und der Frequenz f gebildet sein.

Es ist weiter vorteilhaft, wenn die Eigenbedarfsregelung zur Übermittlung eines Schaltsignals an das Stellelement ausgebildet ist, wenn der Spannungs-Ist-Wert außerhalb des Spannungsbereichs liegt.

Mit Vorteil ist die Eigenbedarfsregelung zum Bilden eines von der Frequenz abhängigen Schwellwerts ausgebildet. Die Eigenbedarfsregelung nutzt den Schwellwert zur Regelung der Spannung. Mittels des frequenzabhängigen Schwellwerts kann die Grenze des Spannungsbereichs für die Regelung so gewählt werden, dass der größtmögliche Spannungstoleranzbereich innerhalb der Begrenzung des Kennfelds aus Spannung und Frequenz für die Regelung genutzt werden kann.

Weiter weist die Eigenbedarfsregelung zweckmäßigerweise ein Frequenzmesselement zum Erfassen eines Frequenz-Ist-Werts im Eigenbedarfsnetz auf.

Vorteilhafterweise ist die Eigenbedarfsregelung zum Bilden eines über die Frequenz konstanten Schwellwerts unter Berücksichtigung der Frequenz f ausgebildet. Damit wird eine Begrenzung der Spannung unter Berücksichtigung des Kennfelds zusätzlich zu einer für die Spannungstoleranz implementierten Spannungsgrenze bewirkt. Mit der zusätzlichen Begrenzung wird auf eine verblüffend einfache Weise bewirkt, dass ein kritischer Quotient aus Spannung und Frequenz nicht erreicht wird und damit eine Überbelastung der Eigenbedarfskomponenten der Windenergieanlage vermieden wird.

Zweckmäßigerweise ist die Eigenbedarfsregelung zum Bilden eines oberen Schwellwerts und eines unteren Schwellwerts als Grenzen für den Spannungsbereich ausgebildet.

Es ist weiter vorteilhaft, wenn das Stellelement zum Ändern der Spannung um höchstens einen Wert, der kleiner ist als die Differenz zwischen dem oberen Schwellwert und dem unteren Schwellwert, ausgebildet ist.

Das Stellelement ist vorteilhafterweise als ein Stufentransformator mit mindestens einer Schaltstufe und zum Umschalten einer Schaltstufe bei Empfang des Schaltsignals ausgebildet. Die Schaltstufe ist mit Vorteil zum Ändern der Spannung um weniger als 20 %, vorzugsweise um weniger als 15 %, weiter vorzugsweise um weniger als 10 % und weiter vorzugsweise um weniger als 5 %, ausgebildet. In einer weiteren vorteilhaften Ausführungsform ist die Höhe der Schaltstufe frei wählbar ausgebildet.

In einer alternativen Ausführungsform ist das Stellelement mit Vorteil ein Spannungswandler auf Umrichter-Basis, der zum kontinuierlichen Anpassen der Spannung ausgebildet ist.

Die Erfindung betrifft weiter einen Nachrüstsatz zum Anschluss an eine Eigenbedarfsregelung zur Regelung der Spannung U eines Eigenbedarfsnetzes, die auf ein Stellelement für das Eigenbedarfsnetz einer Windenergieanlage einwirkt, bei dem erfindungsgemäß vorgesehen ist, dass der Nachrüstsatz ein Zusatzmodul aufweist, das zur Übermittlung eines Schaltsignals an das Stellelement unter Berücksichtigung einer Frequenz f der Spannung U ausgebildet ist.

Das Zusatzmodul bildet vorteilhafterweise die Eigenbedarfsregelung und/oder das Stellelement gemäß der oben angeführten Beschreibung weiter.

Weiter betrifft die Erfindung ein Verfahren zum Regeln einer Spannung eines Eigenbedarfsnetzes einer Windenergieanlage, die ein Stellelement zum Ändern der Spannung im Eigenbedarfsnetz und eine Eigenbedarfsregelung zur Regelung der Spannung U im Eigenbedarfsnetz aufweist, die auf das Stellelement einwirkt, wobei erfindungsgemäß das Übermitteln eines Schaltsignals an das Stellelement unter Berücksichtigung einer Frequenz f der Spannung U vorgesehen ist.

Das Verfahren umfasst vorteilhafterweise eine Eigenbedarfsregelung und/oder ein Stellelement, die gemäß der oben angeführten Beschreibung weitergebildet sind.

Die Erfindung wird im Folgenden anhand der beigefügten Zeichnung, die ein bevorzugtes Ausführungsbeispiel zeigt, näher erläutert. Es zeigen:

Fig. 1: eine schematische Darstellung einer Windenergieanlage mit Eigenbedarfsregelung;

Fig. 2 a-c: eine schematische Darstellung einer Eigenbedarfsregelung mit einem Stellelement und einem Eigenbedarfsnetz;

Fig. 3: eine schematische Darstellung einer Eigenbedarfsregelung mit Stellelement;

Fig. 4: ein Ersatzschaltbild eines Transformators; und

Fig. 5a-f: schematische Diagramme mit Spannungsbereichen und Schwellwerten, die an Kennlinien aus Spannung und Frequenz angepasst sind.

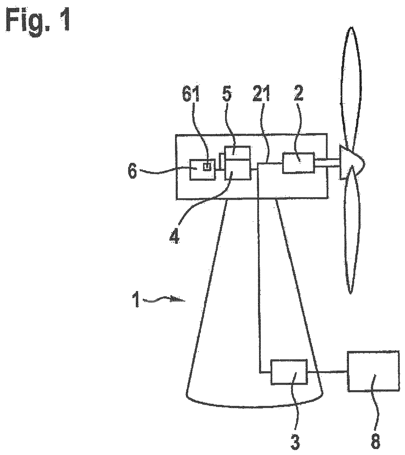

Eine in Fig. 1 dargestellte Windenergieanlage wird in ihrer Gesamtheit mit dem Bezugszeichen 1 bezeichnet. Mittels eines Generators 2 erzeugt die Windenergieanlage 1 elektrische Leistung, die über einen Transformator 3 in das Versorgungsnetz 8 eingespeist wird. Zwischen dem Generator 2 und dem Transformator 3 ist ein Leistungskreis 21 der Windenergieanlage 1 angeordnet.

Für die Regelung und Steuerung der Windenergieanlage 1 werden Eigenbedarfskomponenten 61 benötigt, die über ein Eigenbedarfsnetz 6 mit elektrischer Energie versorgt werden. Das Eigenbedarfsnetz 6 ist dazu mit dem Leistungskreis 21 verbunden. Die Spannungstoleranzen des Leistungskreises 21 sind jedoch höher als die Spannungstoleranzen der Eigenbedarfskomponenten 61 im Eigenbedarfsnetz 6. Daher ist an der Verbindung zwischen dem Leistungskreis 21 und dem Eigenbedarfsnetz 6 ein Stellelement 4 angeordnet, das die von dem Leistungskreis 21 eingespeiste Spannung für das Eigenbedarfsnetz 6 anpasst. Das Stellelement 4 wird durch eine Eigenbedarfsregelung 5 geregelt, die als Spannungsregelung ausgebildet sein kann. Mittels der Eigenbedarfsregelung 5 und dem Stellelement 4 werden Spannungsschwankungen des Leistungskreises 21, die größer als die Spannungstoleranzen im Eigenbedarfsnetz 6 sind, reduziert.

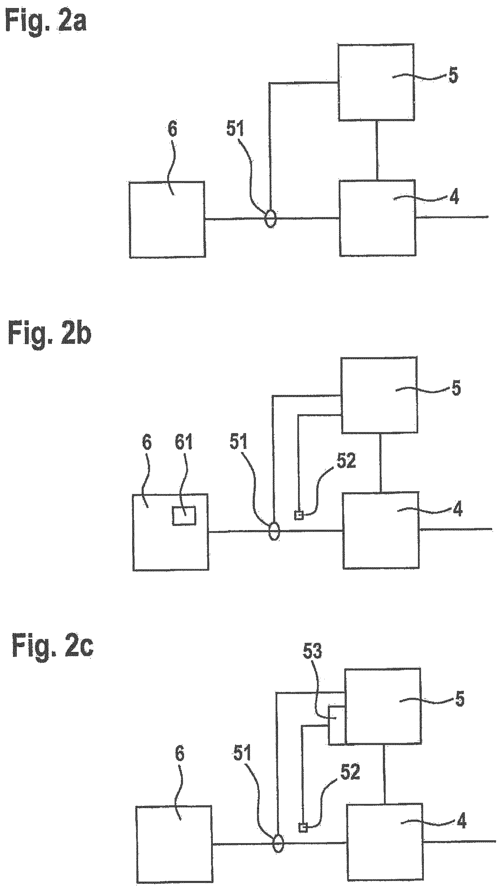

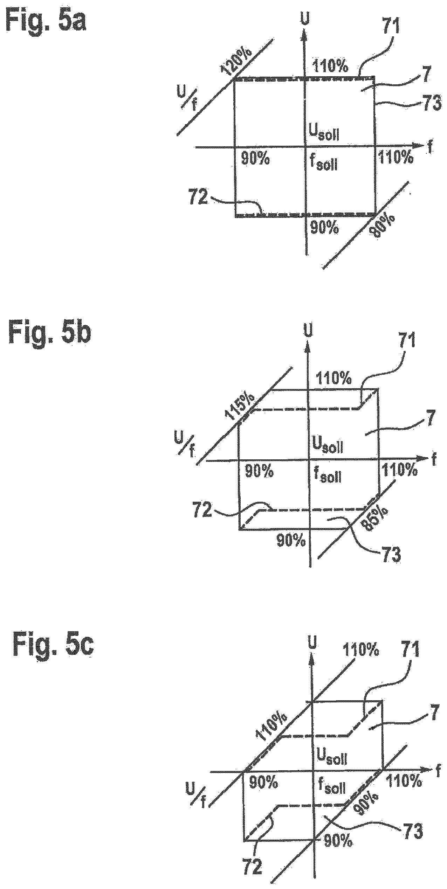

Die Eigenbedarfsregelung 5 weist dazu gemäß der Fig. 2a-c ein Spannungsmesselement 51 auf, das einen Spannung-Ist-Wert der Spannung im Eigenbedarfsnetz 6 erfasst. Die Eigenbedarfsregelung 5 regelt die Spannung auf einen Spannung-Soll-Wert $U_{Soll}$, der innerhalb eines Spannungsbereichs 7 liegt (siehe Fig. 5a-f). Der Spannungsbereich 7 ist durch einen oberen Schwellwert 71 und einen unteren Schwellwert 72 begrenzt. Der Spannungsbereich 7 liegt weiter innerhalb des Regelbereichs 73, in dem eine Regelung der Eigenbedarfsspannung stattfindet. Wenn der Spannung-Ist-Wert den Spannungsbereich 7 verlässt, übermittelt die Eigenbedarfsregelung 5 ein Schaltsignal an das Stellelement 4. Das Stellelement 4 ändert daraufhin die Spannung im Eigenbedarfsnetz 6. Das Stellelement 4 kann dazu als Stufentransformator ausgeführt sein.

Der Stufentransformator weist dabei Schaltstufen auf, die eine ausgehende Spannung relativ zu einer eingehenden Spannung um einen bestimmten Prozentsatz ändern. Diese Schaltstufen dürfen die ausgehende Spannung höchstens soweit ändern, dass der Spannungsbereich 7 bei einem Schaltvorgang nicht verlassen wird, damit keine Regelungsschwingung angeregt wird. Dazu sind die Schaltstufen des Stufentransformators so ausgebildet, dass sie eine relative Änderung der Ausgangsspannung relativ zur Eingangsspannung bewirken, die kleiner als die Differenz des oberen und unteren Schwellwerts 71, 72 ist.

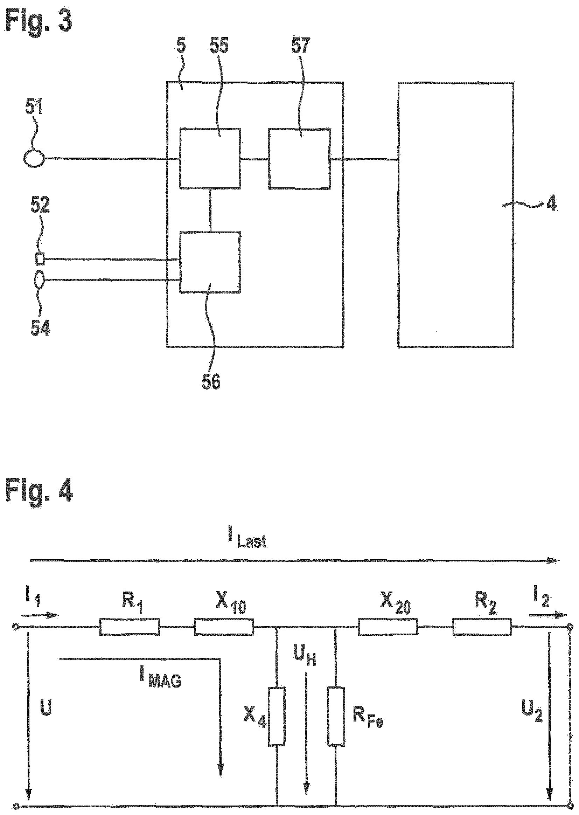

Frequenzschwankungen können in Transformatoren, Asynchronmaschinen und weiteren Eigenbedarfskomponenten Überbelastungen verursachen. Um Frequenzschwankungen des Leistungskreises 21 zu kompensieren, macht sich die Erfindung die Beziehung zwischen der Magnetisierung der Komponenten, der Spannung und der Frequenz zu Nutze. Der Eisenkern von Transformatoren und Asynchronmaschinen wird in Fig. 4 mittels des komplexen Bestandteils $X_H$ beschrieben. Beim Anlegen einer Spannung U wird ein Magnetisierungsstrom $I_{Mag}$ induziert. Der Magnetisierungsstrom $I_{Mag}$ ist proportional zu der Spannung U und antiproportional zum komplexen Bestandteil $X_H$. Daraus ergibt sich mit der imaginären Einheit j, der Induktivität $L_H$ und der Frequenz f

$$I_{Mag} \sim \frac{U}{j \cdot X_H} = \frac{U}{j \cdot 2 \cdot \pi \cdot f \cdot L_H} = \frac{1}{j \cdot 2 \cdot \pi \cdot L_H} \cdot \frac{U}{f}$$

Der Magnetisierungsstrom $I_{Mag}$ hängt damit von dem Quotienten aus der Spannung U und der Frequenz f ab. Der Magnetisierungsstrom $I_{Mag}$ erhöht sich, wenn die Spannung U steigt oder die Frequenz f sinkt. Die Erfindung hat erkannt, dass der Anstieg des Magnetisierungsstroms durch ein Absinken der Frequenz f mittels einer Senkung der Spannung U kompensiert werden kann. Dementsprechend kann das Absinken des Magnetisierungsstroms durch ein Ansteigen der Frequenz f mittels einer Erhöhung der Spannung U kompensiert werden.

In einer bevorzugten ersten Ausführungsform der Eigenbedarfsregelung 5 werden die Schwellwerte 71, 72 abhängig von dem Kennfeld aus der Spannung U der Frequenz f bestimmt. Der Spannungsbereich 7 wird damit optimal an die kritischen Werte des Kennfelds angepasst. Der Regelungsbereich 73 ist in dieser Ausführungsform größer als der Spannungsbereich 7. Innerhalb der Frequenztoleranz des Leistungskreises können alle Spannungen, die innerhalb der Spannungstoleranz und der Toleranz für das Kennfeld aus Spannung und Frequenz des Eigenbedarfsnetzes 6 liegen, damit Teil des Regelungsbereiches 73 sein.

Die Eigenbedarfsregelung 5 weist zur Erfassung der Magnetisierung ein Frequenzmesselement 52 auf. Das Frequenzmesselement 52 ist an eine Eigenbedarfskomponente 61 angeschlossen, die eine magnetisierbare Komponente aufweist. Das Frequenzmesselement 52 erfasst einen Frequenz-Ist-Wert der Eigenbedarfskomponente 61 und übermittelt den Wert an ein Schwellwertspeichermodul 56 der Eigenbedarfsregelung 5 (Fig. 3). Im Schwellwertspeichermodul 56 sind die frequenzabhängigen Schwellwerte 71, 72 des Kennfelds gespeichert. Mittels der Frequenz wird der jeweilige Schwellwert 71, 72 für die Spannung U durch das Schwellwertspeichermodul 56 ermittelt.

Das Schwellwertspeichermodul 56 übermittelt den oberen und den unteren Schwellwert 71, 72 an ein Komparatorelement 55 der Eigenbedarfsregelung 5. An das Komparatorelement 55 wird weiter ein von dem Spannungsmesselement 51 ermittelter Spannungs-Ist-Wert übermittelt. Das Komparatorelement 55 vergleicht den Spannungs-Ist-Wert mit den Schwellwerten 71, 72 des Kennfelds und bestimmt auf diese Weise, ob der Spannungs-Ist-Wert innerhalb des Spannungsbereiches 7 liegt. Wenn der Spannungs-Ist-Wert größer als der obere Schwellwert 71 ist, übermittelt das Komparatorelement 55 ein Oberspannungssignal an ein Stellglied 57 der Eigenbedarfsregelung 5. Das Stellglied 57 übermittelt daraufhin an das Stellelement 4 ein Schaltsignal, das eine Reduktion der Spannung im Eigenbedarfsnetz 6 bewirkt. Wenn der Spannungs-Ist-Wert kleiner als der untere Schwellwert 72 ist, übermittelt das Komparatorelement 55 ein Unterspannungssignal an das Stellglied 57. Das Stellglied 57 übermittelt daraufhin an das Stellelement 4 ein Schaltsignal, das eine Erhöhung der Spannung im Eigenbedarfsnetz 6 bewirkt.

In einer alternativen zweiten Ausführungsform der Eigenbedarfsregelung 5 werden zur Vermeidung kritischer Magnetisierungsströme die Schwellwerte 71, 72 so gewählt, dass kritische Quotienten der Spannung U und der Frequenz f immer außerhalb des Regelungsbereiches 73 liegen. Der Regelungsbereich 73 und der Spannungsbereich 7 sind in dieser Ausführungsform nahezu identisch. Die Schwellwerte 71, 72 sind über die Frequenz konstant, so dass unabhängig von der Frequenz im Eigenbedarfsnetz 6 und innerhalb der Frequenztoleranz des Leistungskreises der Quotient aus Spannung U und Frequenz f keine kritischen Werte annehmen kann. Damit wird auf verblüffend einfache Weise verhindert, dass der durch Frequenzschwankungen beeinflusste Magnetisierungsstrom in den Eigenbedarfskomponenten 61 Überbelastungen verursacht.

Im folgenden Beispiel wird davon ausgegangen, dass die Spannungstoleranz des Eigenbedarfsnetzes 6 bei 10 % um den Spannungs-Soll-Wert $U_{Soll}$ und die Frequenztoleranz des Leistungskreises ebenfalls bei 10 % um den Frequenz-Soll-Wert $f_{Soll}$ liegen.

Wenn der Frequenz-Ist-Wert bei 90 % des Frequenz-Soll-Werts liegt und der Spannungs-Ist-Wert bei 110 % des Spannungs-Soll-Werts, hat sich das Kennfeld aus Spannung und Frequenz, der proportional zum Magnetisierungsstrom ist, um ca. 22 % erhöht. Für eine Begrenzung des Kennfelds auf eine Erhöhung um 20 % gemäß Fig. 5a wird der obere Schwellwert 71 gemäß der ersten und der zweiten Ausführungsform der Eigenbedarfsregelung 5 unter Berücksichtigung des Kennfelds leicht abgesenkt. Für den unteren Schwellwert 72 ergibt sich eine leichte Erhöhung. Die Breite des Spannungsbereichs 7 beträgt in diesem Beispiel ca. 20 % von dem Spannungs-Soll-Wert. Die Schaltstufen eines Stufentransformators bewirken unter diesen Bedingungen eine Änderung der Spannung im Eigenbedarfsnetz 6, die kleiner als 20 % ist.

Gemäß der ersten Ausführungsform kann eine Begrenzung der Schwankung des Magnetisierungsstroms um 15 % gemäß Fig. 5b bewirkt werden. Über den größten Teil des Frequenztoleranz-Bereichs ist eine Spannungsschwankung um 10 % unschädlich. Der obere und der untere Schwellwert 71, 72 liegen über den größten Teil dieses Bereichs bei ca. 7,5 % Erhöhung bzw. Verringerung des Spannungs-Soll-Werts. Die Breite des Spannungsbereichs 7 beträgt daher 15 %. Für eine Begrenzung des Magnetisierungsstroms um 15 % sind die Schaltstufen eines Stufentransformators so ausgebildet, dass sie weniger als 15 % Änderung der Spannung bewirken.

Eine Begrenzung des Magnetisierungsstroms um 10 % mit der ersten Ausführungsform (Fig. 5c) kann mittels eines Regelungsbereichs 73 erzielt werden, bei dem je eine Hälfte des Frequenzbereichs die volle Spannungstoleranz von 10 % zulässt. Die Schwellwerte 71, 72 liegen dabei über die Hälfte des Frequenzbereichs bei ca. 5 %. Entsprechend weist der Spannungsbereich 7 eine Breite von ca. 10 % auf und die Schaltstufen eines Stufentransformators sind so ausgebildet, dass eine Spannungsänderung von weniger als 10 % bewirkt wird.

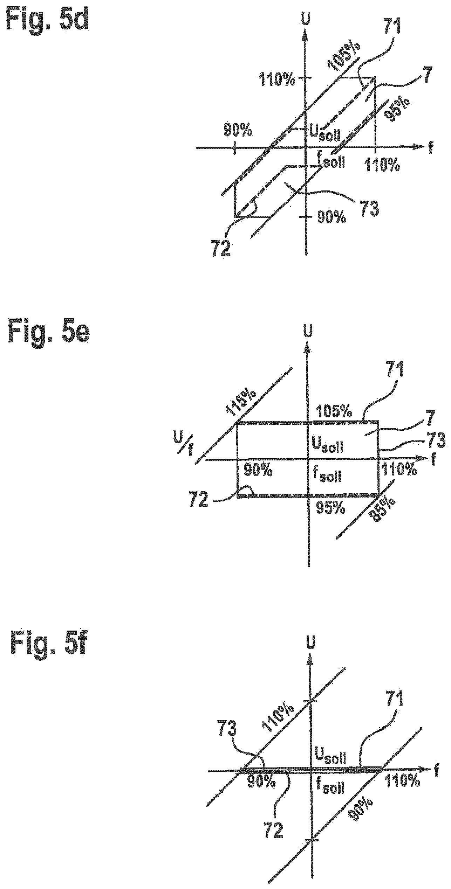

Mit der ersten Ausführungsform ist gemäß Fig. 5d unter den oben angegebenen Bedingungen eine Begrenzung der Schwankung des Magnetisierungsstroms um 5 % möglich. Der Spannungsbereich 7 weist dabei eine Breite von ca. 5 % auf, so dass die Schaltstufen eines Stufentransformators weniger als 5 % Spannungsänderung bewirken.

Um eine Begrenzung der Schwankung des Magnetisierungsstroms um 15 % bei den oben angegebenen Bedingungen zu erreichen, werden gemäß dem zweiten Ausführungsbeispiel die Schwellwerte 71, 72 auf ca. 5 % Schwankung von dem Spannungs-Soll-Wert festgelegt (siehe Fig. 5e). Der Spannungsbereich 7 hat dabei eine Breite, die 10 % von dem Spannungs-Soll-Wert beträgt. Um eine Schwingungsanregung der Eigenbedarfsregelung zu vermeiden, bewirken die Schaltstufen des Stufentransformators lediglich eine Spannungsänderung um weniger als 10 %.

Um mit der zweiten Ausführungsform eine Begrenzung der Magnetisierung um 10 % zu erreichen, wird die Spannung gemäß Fig. 5f auf den Spannungs-Soll-Wert geregelt, ohne einen Spannungstoleranz-Bereich vorzusehen. Der obere und der untere Schwellwert 71, 72 liegen dabei auf den Spannungs-Soll-Wert, der frequenzabhängig gewählt wurde.

Je kleiner die zulässigen Spannungsänderungen der Schaltstufen sind, desto mehr Schaltstufen muss ein Stufentransformator aufweisen, damit eine optimale Regelung durchgeführt werden kann.

Alternativ kann anstatt des Stufentransformators ein Spannungswandler auf Umrichter-Basis als Stellelement 4 verwendet werden. Die Eigenbedarfsregelung 5 bewirkt in Kombination mit einem Spannungswandler auf Umrichter-Basis eine kontinuierliche Regelung auf den Spannungs-Soll-Wert.

Eine bereits vorhandene Eigenbedarfsregelung 5 kann mittels eines Nachrüstsatzes gemäß Fig. 2c nachgerüstet werden. Dazu wird ein Zusatzmodul 53 in die Eigenbedarfsregelung implementiert. Das Zusatzmodul 53 kann dabei ein Frequenzmesselement 52 aufweisen, mit dem der Frequenz-Ist-Wert des Eigenbedarfsnetzes 6 gemessen werden kann. Das Zusatzmodul 53 kann dabei die oben genannten Eigenschaften den bereits in der Eigenbedarfsregelung 5 vorhandenen Eigenschaften hinzufügen.

Bei dem gemäß der Erfindung hinter der Eigenbedarfsregelung 5 stehenden Verfahren zum Regeln der Spannung im Eigenbedarfsnetz 6 umfasst das Verfahren das Übermitteln eines Schaltsignals an das Stellelement 4 unter Berücksichtigung der Frequenz f der Spannung U. Weiter kann mindestens ein Schwellwert 71, 72 unter Berücksichtigung eines Kennfelds aus der Spannung und der Frequenz der Spannung gebildet werden. Der Schwellwert 71, 72 bildet dabei eine Grenze für einen Spannungsbereich 7. Dazu sind ein oberer Schwellwert 71 und ein unterer Schwellwert 72 vorgesehen.

## Patentansprüche

1. Windenergieanlage umfassend ein Eigenbedarfsnetz (6), ein Stellelement (4) zum Ändern einer Spannung U im Eigenbedarfsnetz (6) und eine Eigenbedarfsregelung (5) zur Regelung der Spannung U im Eigenbedarfsnetz (6),
**dadurch gekennzeichnet, dass**
die Eigenbedarfsregelung (5) zur Übermittlung eines Schaltsignals an das Stellelement (4) unter Berücksichtigung einer Frequenz f der Spannung U ausgebildet ist.

2. Windenergieanlage nach Anspruch 1,
**dadurch gekennzeichnet, dass**
die Eigenbedarfsregelung (5) zur Ermittlung des Verhältnisses aus der Spannung U und der Frequenz f ausgebildet ist.

3. Windenergieanlage nach einem der Ansprüche 1 oder 2,
**dadurch gekennzeichnet, dass**
die Eigenbedarfsregelung (5) ein mit dem Eigenbedarfsnetz (6) verbundenes Spannungsmesselement (51) zum Erfassen eines Spannungs-Ist-Werts umfasst.

4. Windenergieanlage nach einem der Ansprüche 1 bis 3,
**dadurch gekennzeichnet, dass**
die Eigenbedarfsregelung (5) zum Bilden mindestens eines Schwellwerts (71, 72) als Grenze eines Spannungsbereichs (7) ausgebildet ist, wobei beim Bilden ein Kennfeld aus der Spannung U und einer Frequenz f der Spannung U berücksichtigt wird.

5. Windenergieanlage nach Anspruch 4,
**dadurch gekennzeichnet, dass**
die Eigenbedarfsregelung (5) zur Übermittlung eines Schaltsignals an das Stellelement (4) ausgebildet ist, wenn der Spannungs-Ist-Wert außerhalb des Spannungsbereichs (7) liegt.

6. Windenergieanlage nach einem der Ansprüche 4 oder 5,
**dadurch gekennzeichnet, dass**
die Eigenbedarfsregelung (5) zum Bilden eines dynamischen von der Frequenz f abhängigen Schwellwerts (71, 72) ausgebildet ist.

7. Windenergieanlage nach einem der Ansprüche 1 bis 6,
**dadurch gekennzeichnet, dass**
die Eigenbedarfsregelung (5) ein Frequenzmesselement (52) zum Erfassen eines Frequenz-Ist-Werts im Eigenbedarfsnetz (6) aufweist.

8. Windenergieanlage nach Anspruch 7,
**dadurch gekennzeichnet, dass**
die Eigenbedarfsregelung (5) zum Bilden eines konstanten Schwellwerts (71, 72) unter Berücksichtigung der Frequenz f ausgebildet ist.

9. Windenergieanlage nach den Ansprüchen 1 bis 8,
**dadurch gekennzeichnet, dass**
die Eigenbedarfsregelung (5) zum Bilden eines oberen Schwellwerts (71) und eines unteren Schwellwerts (72) als Grenzen für den Spannungsbereich (7) ausgebildet ist.

**10.** Windenergieanlage nach Anspruch 9,
**dadurch gekennzeichnet, dass**
das Stellelement (4) zum Ändern der Spannung U um höchstens einen Wert, der kleiner ist als die Differenz zwischen dem oberen Schwellwert (71) und dem unteren Schwellwert (72), ausgebildet ist.

**11.** Windenergieanlage nach einem der Ansprüche 1 bis 10,
**dadurch gekennzeichnet, dass**
das Stellelement (4) ein Stufentransformator mit mindestens zwei Schaltstufen ist und zum Umschalten einer Schaltstufe bei Empfang des Schaltsignals ausgebildet ist.

**12.** Windenergieanlage nach Anspruch 11,
**dadurch gekennzeichnet, dass**
die Schaltstufe zum Ändern der Spannung U um weniger als 20 %, weiter vorzugsweise um weniger als 15 %, weiter vorzugsweise um weniger als 10 % und weiter vorzugsweise um weniger als 5 %, ausgebildet ist.

**13.** Windenergieanlage nach Anspruch 11,
**dadurch gekennzeichnet, dass**
die Höhe der Schaltstufe frei wählbar ausgebildet ist.

**14.** Windenergieanlage nach einem der Ansprüche 1 bis 11,
**dadurch gekennzeichnet, dass**
das Stellelement (4) ein Spannungswandler auf Umrichter-Basis ist, der zum kontinuierlichen Anpassen der Spannung U ausgebildet ist.

**15.** Nachrüstsatz zum Anschluss an eine Eigenbedarfsregelung (5) zur Regelung der Spannung U eines Eigenbedarfsnetzes (6), die auf ein Stellelement (4) für das Eigenbedarfsnetz (6) einer Windenergieanlage (1) einwirkt,
**dadurch gekennzeichnet, dass**
der Nachrüstsatz ein Zusatzmodul (53) aufweist, das zum Übermitteln eines Schaltsignals an das Stellelement (4) unter Berücksichtigung einer Frequenz f der Spannung U ausgebildet ist.

**16.** Nachrüstsatz nach Anspruch 15,
**dadurch gekennzeichnet, dass**
das Zusatzmodul (53) die Eigenbedarfsregelung (5) nach einem der Ansprüche 2 bis 9 weiterbildet und/oder das Stellelement (4) nach einem der Ansprüche 10 bis 14 weiterbildet.

**17.** Verfahren zum Regeln einer Spannung eines Eigenbedarfsnetzes (6) einer Windenergieanlage (1), die ein Stellelement (4) zum Ändern einer Spannung U im Eigenbedarfsnetz (6) und eine Eigenbedarfsregelung (5) zur Regelung der Spannung U im Eigenbedarfsnetz (6) aufweist,
**gekennzeichnet durch**,
Übermitteln eines Schaltsignals an das Stellelement (4) unter Berücksichtigung einer Frequenz f der Spannung U.

**18.** Verfahren nach Anspruch 17,
**dadurch gekennzeichnet, dass**
die Eigenbedarfsregelung (5) nach den Ansprüchen 2 bis 9 weitergebildet ist und/oder das Stellelement (4) nach einem der Ansprüche 10 bis 14 weitergebildet ist.

# Fig. 1

# Fig. 2a

# Fig. 2b

# Fig. 2c

**Fig. 3**

**Fig. 4**

**Fig. 5a**

**Fig. 5b**

**Fig. 5c**

Fig. 5d

Fig. 5e

Fig. 5f

Europäisches Patentamt

European Patent Office

Office européen des brevets

# EUROPÄISCHER RECHERCHENBERICHT

**Nummer der Anmeldung**

EP 17 15 6082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/230689 A1 (BURRA RAJNI KANT [IN] ET AL) 17. September 2009 (2009-09-17) | 1-3, 7-10, 14-18 | INV. H02J3/38 |
| Y | * Absätze [0009], [0030] - [0032]; | 11-13 | |
| A | Abbildungen 4,5 * | 4-6 | |
| | ----- | | |
| X | US 2008/001408 A1 (LIU YAN [US] ET AL) 3. Januar 2008 (2008-01-03) | 1-3, 7-10, 14-18 | |
| Y | * Absatz [0036] - Absatz [0043]; | 11-13 | |
| A | Abbildungen 4-11 * | 4-6 | |
| | ----- | | |
| Y | DE 10 2013 217087 A1 (SENVION SE [DE]) 5. März 2015 (2015-03-05) | 1-3, 7-10, 14-18 | |
| | * Absatz [0022] - Absatz [0029]; Abbildung 1 * | | |
| | ----- | | |
| Y | EP 2 600 515 A1 (ROLLS ROYCE PLC [GB]) 5. Juni 2013 (2013-06-05) | 1-3, 7-10, 14-18 | |
| | * Zusammenfassung * | | RECHERCHIERTE SACHGEBIETE (IPC) |
| | ----- | | H02J |
| Y | WO 92/09024 A1 (ELIN ENERGIEVERSORGUNG [AT]) 29. Mai 1992 (1992-05-29) * Anspruch 1 * | 11-13 | |
| | ----- | | |

Der vorliegende Recherchenbericht wurde für alle Patentansprüche erstellt

| Recherchenort | Abschlußdatum der Recherche | Prüfer |
|---|---|---|
| München | 14. Juni 2017 | Telega, Pawel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 6082

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2017

| Im Recherchenbericht angeführtes Patentdokument | Datum der Veröffentlichung | Mitglied(er) der Patentfamilie | Datum der Veröffentlichung |
|---|---|---|---|
| US 2009230689 A1 | 17-09-2009 | CN 101534013 A<br>DK 2101392 T3<br>EP 2101392 A2<br>ES 2585403 T3<br>US 2009230689 A1 | 16-09-2009<br>22-08-2016<br>16-09-2009<br>05-10-2016<br>17-09-2009 |
| US 2008001408 A1 | 03-01-2008 | KEINE | |
| DE 102013217087 A1 | 05-03-2015 | DE 102013217087 A1<br>EP 3039286 A1<br>WO 2015028399 A1 | 05-03-2015<br>06-07-2016<br>05-03-2015 |
| EP 2600515 A1 | 05-06-2013 | EP 2600515 A1<br>US 2013057235 A1 | 05-06-2013<br>07-03-2013 |
| WO 9209024 A1 | 29-05-1992 | EP 0558532 A1<br>WO 9209024 A1 | 08-09-1993<br>29-05-1992 |

EPO FORM P0461

Für nähere Einzelheiten zu diesem Anhang : siehe Amtsblatt des Europäischen Patentamts, Nr.12/82